# EUROPÄISCHE PATENTSCHRIFT

(11) **EP 1 211 046 B1**
(45) Veröffentlichungstag und Bekanntmachung des Hinweises auf die Patenterteilung: **29.11.2006**
(21) Anmeldenummer: 01128634.1
(22) Anmeldetag: 30.11.2001
(51) Int. Cl.: B29C 47/00, B29C 47/10, B29C 47/40, B29C 47/50, B29C 47/58, B29C 47/34

(54) **Verfahren und Anlage zur Herstellung von faserverstärkten Kunststoffmassen**
Method and apparatus for producing fiberreinforced polymer compositions
Procédé et dispositif pour la fabrication de compositions polymères renforcées de fibres

(30) Priorität: 30.11.2000 DE 10059461
(43) Veröffentlichungstag der Anmeldung: 05.06.2002
(73) Patentinhaber: Dieffenbacher GmbH + Co. KG, 75031 Eppingen (DE)
(72) Erfinder: Brüssel, Richard, 75056 Sulzfeld (DE)
(74) Vertreter: Hartdegen, Anton

(56) Entgegenhaltungen:
- EP-A- 0 960 715
- DE-A- 2 351 328
- DE-A- 19 836 787
- FR-A- 1 530 229
- US-A- 5 110 275
- US-A- 5 879 602
- PATENT ABSTRACTS OF JAPAN vol. 006, no. 224 (M-170), 9. November 1982 (1982-11-09) -& JP 57 126639 A (TOYODA GOSEI KK), 6. August 1982 (1982-08-06)

## Beschreibung

Die Erfindung bezieht sich auf ein Verfahren zur Herstellung von faserverstärkten Kunststoffmassen gemäß dem Oberbegriff des Anspruches 1. Sie betrifft ferner eine Anlage zur Durchführung des Verfahrens nach dem Oberbegriff des Anspruches 11.

Ein solches Verfahren ist aus der DE 198 36 787 A1 bekannt. Das Verfahren und der darin beschriebene Plastifizierextruder haben sich in der Praxis bewährt. Sie sind jedoch für spezielle Faserstränge und Fasermaterialien noch verbesserungsfähig, insbesondere bei der Herstellung von faserverstärkten Kunststoffmassen (Plastifikate) aus Faservliesen oder Fasermatten und einem flüssigen Kunststoffilm. Um den gleichen Effekt wie mit dem Verfahren nach DE 198 36 787 A1 zu erreichen wurden bisher folgende Verfahren angewendet:
- Naturfasern wurden über Halbzeug (Pellets) aufgeschmolzen, z. B. als Stäbchengranulat, oder
- über ein Faserstopfaggregat wurden diese Fasern in die Tränkeinrichtung geführt. Dadurch wurde eine sehr schlechte Tränkgüte erreicht.
- Oder es werden Faservliese mit thermoplastischen Fasern durchsetzt und im Umformprozeß gepreßt.

Der Nachteil bei den bekannten Verfahren und bei der Verwendung von Halbzeugprodukten sind die hohen Kosten sowie beim Umformprozeß der zusätzliche Verschnitt.

Beim Aufschmelzen der Faserstäbchen ist die geringe Aufschmelzleistung bei faserschonender Aufschmelzung und dem Arbeiten mit Faserstopfaggregaten die große Faserschädigung zu nennen bzw. die schlechte Fasertränkung.

Der Erfindung liegt die Aufgabe zugrunde, ein Verfahren anzugeben, wie die angeführten Nachteile zu vermeiden sind und insbesondere im Plastifikat den Fasergehalt zu erhöhen und besser definieren zu können sowie eine Leistungssteigerung bei der Herstellung von Plastifikaten aus Faservliesen und Fasermatten zu erzielen. Es ist ferner Ziel der Erfindung eine Anlage mit Plastifizierextruder zur Durchführung des Verfahrens mit einer angepaßten Geometrie des Extrudergehäuses und der zugehörigen Schneckenelemente zu schaffen.

Die Lösung dieser Aufgabe für das Verfahren geht aus dem kennzeichnenden Teil des Anspruches 1 und anhand dreier beschriebener Ausführungsbeispiele wie folgt hervor:
Im ersten Ausführungsbeispiel wird die Aufgabe nun dadurch gelöst, daß bahnförmige, mit etwa der Breite b der Eingangsschlitzlänge ausgeführte endlose Faservliese oder Fasermatten aus Natur-, Chemie-, Glas-, Mineral-, Kohlenstoff-, Reiß- oder Metallfasern und ihrer möglichen Kombinationen der schlitzförmigen Zuführöffnung des Plastifizierextruders mit dem flüssigen Kunststoff zugeführt werden und daß die Faservliese oder Fasermatten nach Umschlingungen im vergrößerten Bereich des Schneckenzylinders in die Nuten und auf die Stege der Einzugswelle eingeführt werden.
Im zweiten Ausführungsbeispiel damit, daß bahnförmige, mit der Breite b der Eingangsschlitzlänge ausgeführte endlose Faservliese oder Fasermatten aus Natur-, Chemie-, Glas-, Mineral-, Kohlenstoff-, Reiß- oder Metallfasern und ihrer möglichen Kombinationen einen schlitzförmigen Zuführöffnung des Plastifizierextruders mit dem flüssigen Kunststoff zugeführt werden und daß die Faservliese oder Fasermatten nach Umschlingungen im vergrößerten Bereich des Schneckenzylinders durch Abstreifer in die Nuten und auf die Stege der Einzugswelle gedrückt werden und im dritten Ausführungsbeispiel damit, daß bahnförmige, mit der Breite b der Eingangsschlitzlänge ausgeführte endlose Faservliese oder Fasermatten aus Natur-, Chemie-, Glas-, Mineral-, Kohlenstoff-, Reiß- oder Metallfasern und ihrer möglichen Kombinationen einen schlitzförmigen Zuführöffnung des Plastifizierextruders mit dem flüssigen Kunststoff zugeführt werden und daß die Faservliese oder Fasermatten nach Umschlingungen im vergrößerten Bereich des Schneckenzylinders durch Abstreifer in die Nuten und auf die Stege der Einzugswelle und der Tandemwelle gedrückt werden.

Für den Einzug von Faservliesen und/oder Fasermatten ist es im allgemeinen vorteilhaft, daß das Gehäuse im Bereich der zweiten Schneckenwelle ebenfalls im Durchmesser vergrößert wird. Dabei wird die Durchmesservergrößerung im Einzugsbereich je nach Faserstruktur und Tränkverhalten mehr oder weniger weit stromabwärts in den geschlossenen Bereich hineingezogen. Insbesonders bei höherer Zugbelastbarkeit der bandförmigen Vliese und/oder Matten wird der Tränkvorgang verbessert, wenn ohne Abstreifer gearbeitet wird, weil das aufgeschmolzene Kunststoffband/Kunststofffilme im Einzugsbereich eingewickelt und durch das Faserband gedrückt wird. Bei geringer Zugfestigkeit des Vlieses und/oder der Matten ist es dagegen von Vorteil, mit einem Abstreifer an der Einzugswelle zu arbeiten und die Durchmesservergrößerung im Einzugsgehäuse für beide Schneckenwellen vorzusehen, wobei die Durchmesservergrößerung im Bereich der zweiten Welle geringer und besonders bei der Einzugswelle exzentrisch angeordnet sein kann. Das heißt damit beim Umlauf auf den Schneckenstegen der Einzugswelle über die Durchmesservergrößerung des Gehäuses kein Materialaufbau stattfinden kann, wird vor der erneuten Aufnahme des aufgeschmolzenen Kunststoffbandes die Schneckengehäusebohrung auf den Schneckendurchmesser reduziert. Dies wird vorzugsweise mit einer eingesetzten Abstreifleiste realisiert. Die Abstreifleiste kann auch mit einem reduzierten Spalt zu den Schneckenstegen ausgeführt sein.

Zur Durchführung dieser Verfahrensabläufe besteht die Anlage aus einem Kunststoff-Aufschmelzextruder und einem Plastifizierextruder und ist weiter nach Anspruch 11 darin gekennzeichnet, daß zum Einführen von bahnförmigen endlosen Faservliesen oder Fasermatten aus Natur-, Chemie-, Glas-, Mineral-, Kohlenstoff-, Reiß- oder Metallfasern in den Plastifizierextruder die Zuführöffnung parallel zu den Extruderachsen und schlitzförmig über der Einzugswelle angeordnet ist, wobei die Eingangsschlitzlänge mit etwa der Breite b des Faservlieses oder den Fasermatten ausgeführt ist, die um 2 bis 20 mm, vorzugsweise exzentrisch angeordneten, vergrößerten Durchmesser D der Gehäusebohrungen nach Umschlingungen wieder mit dem sonst üblichen Durchmesser d versehen sind oder nach Umschlingungen Abstreifer an der Tandem- und/oder an der Einzugswelle angeordnet sind.

Mit dem Verfahren und der Anlage mit Plastifizierextruder nach der Erfindung werden nachstehende Vorteile bzw. Verbesserungen erzielt:
- im Endprodukt kann ein hoher und genau definierter Fasergehalt sowie eine gute Tränkqualität aller Fasern erreicht werden,
- es wird ein hoher Durchsatz und damit eine sehr große Leistungssteigerung bei der Erstellung der Plastifikate erreicht,
- ohne Halbzeugerzeugung kann direkt vom Rohballen über eine Vliesherstellmaschine im Direktverfahren die Tränkung und Herstellung des Plastifikats erfolgen, wobei an die Faservliese keine hohen Anforderungen an die Transportstabilität gestellt werden und
- mit der erfindungsgemäßen Plastifikattechnologie auch ein Fließpressen möglich ist, womit Rippen und Noppen im Preßteil angeformt werden können.

Als vorteilhaft ist weiter anzuführen, daß das Flächengewicht bzw. das Metergewicht des Faservlieses/-matten und/oder des Geleges vor dem Einlauf in den Extruder kontinuierlich gewogen und durch eine rückwärts- und/oder vorwärtsgerichtete kaskadische Regelstrategie der prozentuale Fasergewichtsanteil im Plastifikat und das Plastifikatgewicht in engen Toleranzen gehalten wird. Auch ist vorteilhaft, daß das bandförmige Faservlies und/oder Fasermatten, in Bobinen/Rollen bereitgestellt, dem Extruder zugeführt werden können, wobei diese durch einen manuellen oder automatischen Bobinen/Rollenwechsel zu einem endlosen Faservlies oder Fasermatte für die Zuführung in den Extruder verbunden sind oder dadurch daß das Faservlies durch Aufstreuen der Faser direkt auf einem Transportband gebildet und dem Extruder zugeführt wird. Auch kann das Faservlies und/oder die Fasermatte direkt innerhalb der Linie getrocknet werden, bevor diese in den Extruder eingezogen werden. Zusätzlich besteht schließlich noch die Möglichkeit der Trocknung des Faservlieses vor dem Einzug in den Extruder und die Faservliesbahn oder Fasermattenbahn kann zusätzlich als Transportbahn für aufgestreute Kurzfasern, Langfasergranulate, Granulat, Rezyklatchips oder Füllstoffe dienen.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: die Anlage zur Durchführung des Verfahrens nach der Erfindung in Seitenansicht und Schnitt B-B nach Figur 2,
- Figur 2: die Anlage gemäß der Erfindung nach einem Schnitt A-A aus Figur 1,
- Figur 3: die Anlage gemäß der Erfindung nach einem zweiten Ausführungsbeispiel,
- Figur 4: die Anlage gemäß der Erfindung nach einem dritten Ausführungsbeispiel und
- Figur 5: die Anlage gemäß dem dritten Ausführungsbeispiel mit Einlaufbacke.

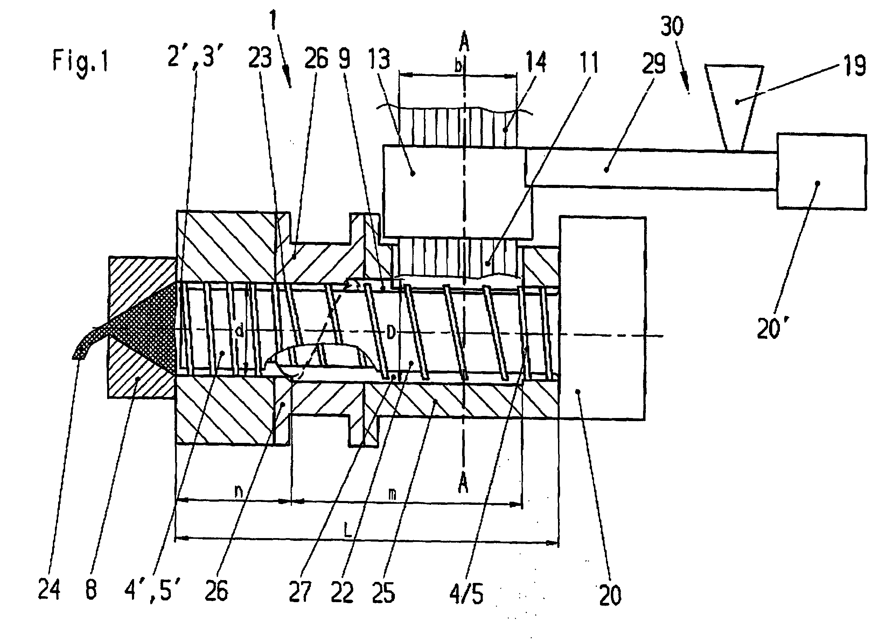

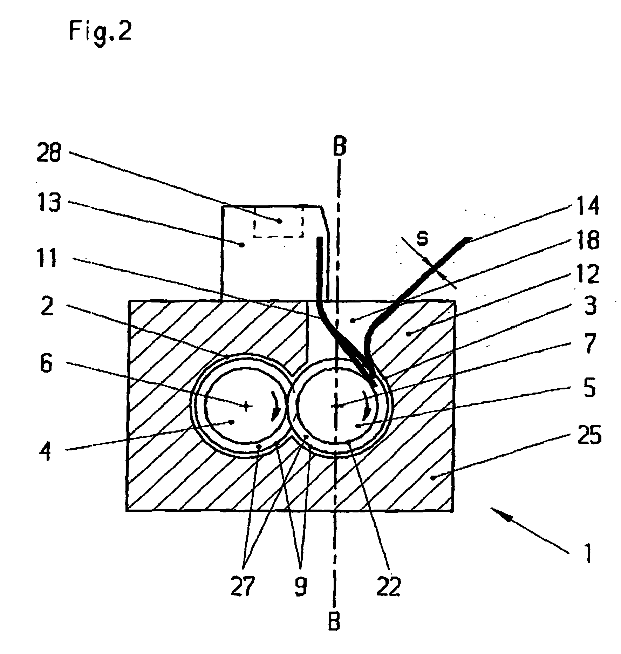

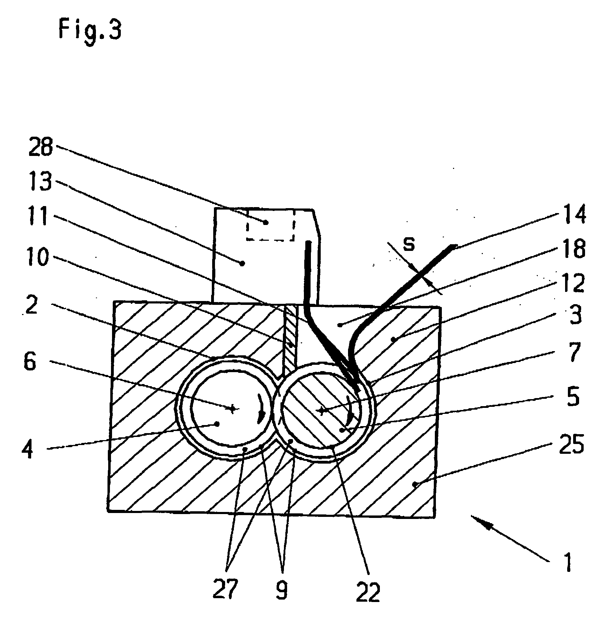

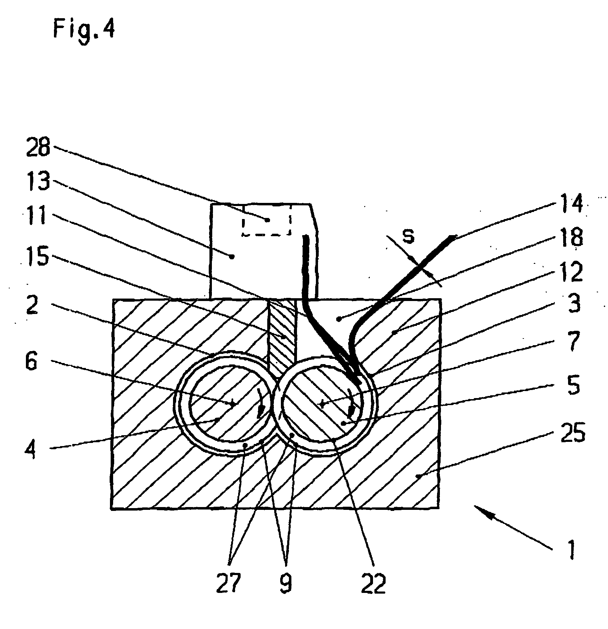

Die Figur 1 zeigt die Anlage zur Durchführung des Verfahrens, umfassend den Plastifizierextruder 1 und den Kunststoff-Aufschmelzextruder 30. In den Figuren 2 bis 5 ist der Plastifizierextruder 1 gemäß der Erfindung als Zwei-Wellen-Extruder mit der Länge L dargestellt. Wie die Figur 1 zeigt, ist die Länge des Plastifizierextruders 1 in zwei Funktionsbereiche eingeteilt und dafür entsprechend ausgebildet, nämlich in eine Einzug- und Imprägnierstrecke m und eine Austrag- und Förderstrecke n. Für den formenden Austrag des fertigen Produktes 24 (=faserverstärkte Kunststoffmasse) ist am Ende eine Austrittsdüse 8 angebracht. Die Figur 2 zeigt im Schnitt A-A aus Figur 1 den Einzug des Faservlieses oder der Fasermatte 14 in die Zuführöffnung 18 und die links der Zuführöffnung 18 angeordnete Austragsdüse 13. Der Plastifizierextruder 1 besteht weiter aus dem Schneckengehäuse 25 mit den Gehäusebohrungen 2 und 3 sowie den Extruderachsen 6 und 7 für die Einzugswelle 5 und die Tandemwelle 4 in der Einzug- und Imprägnierstrecke m, dem Schneckengehäuse 26 mit den Bohrungen 2' und 3' für die Extruderwellen 4' und 5' der Austrag- und Förderstrecke n. Nach Figur 1 besteht der Kunststoff-Aufschmelzextruder 30 für die Aufbereitung des Kunststoffs aus dem Einfülltrichter 19 für die Kunststoffgranulatzuführung und der Kunststoffüberführung 29. Die Kunststoffüberführung 29 befördert dabei den aufbereiteten Kunststoffilm 11 über die Kunststoffeinführung 28 in die Austragsdüse 13. Für den Antrieb der Extruderwellen 4/5 und 4'/5' dient der Antrieb 20. Im Fertigungsbetrieb wird das Faservlies 14 bei der Förderbewegung in den Einzugskanal 27 und von hier in Richtung Produktaustrag mit den Schneckenelementen des Plastifizierextruders 1 über die vorteilhaft gerundeten Schneckenstegen 9 und den gerundeten Schneckengrund 22 gezogen. Dabei bewegt sich das Faservlies 14 noch auf den Schneckenstegen 9 vom Außendurchmesser und dem Kerndurchmesser auf und ab und werden beim gleichsinnig drehenden Doppelschneckenextruder 1 jeweils von der Einzugswelle 5 zur Tandemwelle 4 und umgekehrt übergeben. Das heißt das Faservlies 14 wird in einer Art Umlauf, je nach Faserbahnbreite b, mehr oder weniger überlappend in Richtung Austrittsdüse 8 gefördert. Bei diesen Transportgleitbewegungen wird der mit dem Faservlies 14 mitgeführte flüssige Kunststoffilm 11 in das Faservlies 14 und den Einzelfasern hineingerieben.
Wie aus den Figuren 1 und 2 weiter hervorgeht wird das Faservlies 14 nach dem ersten Ausführungsbeispiel in den Eingangsschlitz der Zuführöffnung 18 des Plastifizierextruders 1 mit seiner Breite b parallel zu den Extruderachsen 6 und 7 und annähernd tangential auf die Einzugswelle 5 und um die Tandemwelle 4 in Umschlingungen vortreibend und überlappend aufgewickelt sowie von im Durchmesser D um 2 bis 20 mm vergrößerte, ggf. exzentrisch angeordnete, Gehäusebohrungen 2 und 3 eingezogen. In der Zuführöffnung 18 erfolgt dabei das Aufbringen eines flüssigen Kunststoffilms 11 direkt auf eine Flachseite des Faservlieses 14 und durch Einpressen des Faservliesbandes in den aus der linken Austragsdüse 13 auf die Einzugswelle 5 aufgetragenen flüssigen Kunststoffilm 11. Dabei wird das Faservlies 14 innerhalb der Einzugs- und Imprägnierstrecke m an den Extruderwellen 4 und 5 einreibend an beiden Flachseiten mit dem flüssigen Kunststoffilm 11 benetzt bzw. getränkt. Anschließend werden die mit dem Kunststoffilm 11 durchimprägnierten bzw. durchgetränkten Einzelfasern des Faservlieses 14 aus der Einzugs- und Imprägnierstrecke m in die im Durchmesser d verkleinerten Gehäusebohrungen 2' und 3' mit den Schneckenstegen 23 in die Austrag- und Förderstrecke n geführt. Bei einfach zu tränkenden Fasersträngen und angepaßter Konsistenz der Kunststoffschmelze kann es gemäß einem zweiten und dritten Ausführungsbeispiel genügen, wenn das Faservlies 14 nur in einfachen Umschlingungen um die Einzugswelle 5 und um die Tandemwelle 4 mit vergrößertem Durchmesser D der Gehäusebohrungen 2 und 3 eingeführt wird, wobei im zweiten Ausführungsbeispiel das Faservlies 14 mit einem Abstreifer 10 in die Nuten und auf die Schneckenstege 23 der Einzugswelle 5 gedrückt werden, während im dritten Ausführungsbeispiel das Faservlies 14 mit einem Abstreifer 15 in die Nuten- und Schneckenstege 23 der Einzugs- und Tandemwelle 5 und 4 gedrückt wird.

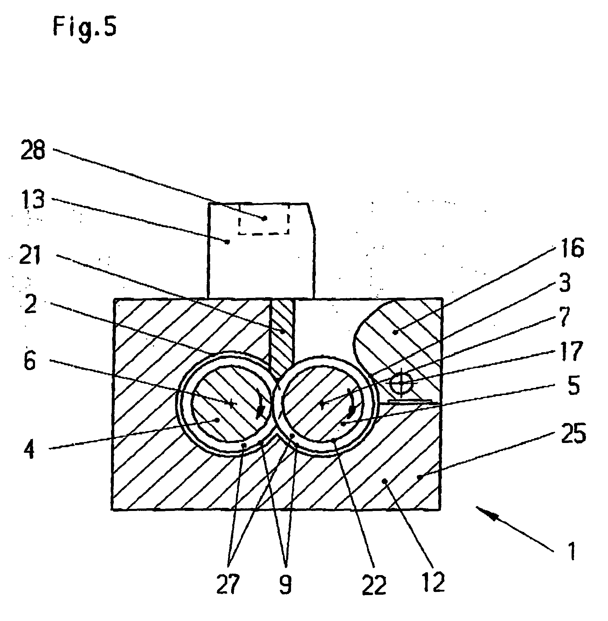

Das Faservlies 14 wird in die Zuführöffnungen 18 zweckmäßigerweise über eine abgerundete Einlaufwand 12 auf die Einzugswelle 5 geführt. Eine Verbesserung in Bezug auf eine störungsfreie Führung in der Zuführöffnung 18 für das Faservlies 14 und eine mögliche Reinigung dieses Bereichs besteht nach Figur 5 darin, daß anstelle der Einlaufwand 12 eine ein- und ausbaubare bzw. ein- und ausfahrbare Einlaufbacke 16 vorgesehen sind. Diese Einlaufbacke 16 ist gegenüber dem Schneckengehäuse 25 thermisch isoliert und mittels einer Bohrung 17 beheiz- oder kühlbar und auf eine Temperatur einstellbar, die etwas unterhalb der Klebetemperatur des Faservlieses 14 liegt. Vorteilhaft ist weiter, wenn die Einlaufbacke 16 mit einem oszillierendem Antrieb ausgestattet ist und die Abstreifer 10 und 15 als austauschbare Abstreifer 21 ausgeführt sind und
daß bei Verwendung von aus Faserstücken bestehendem Faservlies 14 stromabwärts nach der Zuführöffnung 18 die Durchmesserreduzierung d spiralförmig in Drehrichtung endend ausgeführt ist.

### Bezugszeichenliste:

- 1.: Plastifizierextruder
- 2.: Gehäusebohrung (Imprägnierteil)
- 3.: Gehäusebohrung (Imprägnierteil)
- 4.: Tandemwelle (Imprägnierteil)
- 5.: Einzugswelle (Imprägnierteil)
- 6.: Extruderachse
- 7.: Extruderachse
- 8.: Austrittsdüse
- 9.: abgerundeter Schneckensteg
- 10.: Abstreifer
- 11.: flüssiger Kunststoffilm
- 12.: abgerundete Einlaufwand
- 13.: Austragsdüse
- 14.: Faservlies
- 15.: Abstreifer
- 16.: Einlaufbacke
- 17.: Bohrung in Einlaufbacke 16
- 18.: Zuführöffnung
- 19.: Einfülltrichter
- 20.: Antrieb der Extruderwellen 4, 5
- 21.: Abstreifer
- 22.: Schneckengrund
- 23.: Schneckensteg
- 24.: Produkt, Plastifikat
- 25.: Schneckengehäuse für m
- 26.: Schneckengehäuse für n
- 27.: Einzugskanal
- 28.: Kunststoffeinführung zu Austragsdüse 13
- 29.: Kunststoffüberführung zu Plastifizierextruder 1
- 30.: Kunststoff-Aufschmelzextruder

- b: Breite der Faserbahn
- D: ⌀ Wickelbohrung
- d: ⌀ Schneidbohrung
- m: Einzugs- und Imprägnierstrecke
- n: Austrag- und Förderstrecke
- L: Plastifizierextruderlänge

## Patentansprüche

1. Verfahren zur Herstellung von faserverstärkten Kunststoffmassen (24) unter Verwendung eines Plastifizierextruders (1), bei dem ein endloser Faserstrang (14) über eine Zuführeinrichtung und eine Vorwärmeinrichtung in die Zuführöffnung (78) des Plastifizierextruders (1) mit seiner Breite (b) parallel zu den Extruderachsen (6, 7) und annähernd tangential auf eine Extruderwelle (5) und um die Extruderwellen (4, 5) vortreibend aufgewickelt sowie in Zylinderbohrungen (2, 3) von im Durchmesser vergrößerte Schneckenzylinder eingezogen wird, dabei erfolgt in der Zuführöffnung (18) das Aufbringen eines flüssigen Kunststoffilmes (11) auf die Extruderwelle (5) und das Einpressen des Faserstranges (14) in den Kunststoffilm (11), anschließend wird der Faserstrang (14) innerhalb einer Einzugs- und Imprägnierstrecke (m) mit den einzelnen Fasern an den Extruderwellen (4, 5) einreibend bzw. durchreibend allseitig mit dem flüssigen Kunststoffilm (11) benetzt bzw. getränkt und die mit Kunststoff durchimprägnierten bzw. durchgetränkten Einzelfasern bzw. der Faserstrang aus der Einzugs- und lmprägnierstrecke (m) über einen im Durchmesser verkleinerten Schneckenzylinder in eine Austrag- und Förderstrecke (n) geführt und als weiterverarbeitbare faserverstärkte Kunststoffmasse (24) ausgetragen, **dadurch gekennzeichnet,**
**daß** bahnförmige, mit etwa der Breite (b) der Schlitzlänge der Zuführöffnung (18) ausgeführte endlose Faservliese oder Fasermatten (14) aus Natur-, Chemie-, Glas-, Mineral-, Kohlenstoff-, Reiß- oder Metallfasern und ihrer möglichen Kombinationen der schlitzförmigen Zuführöffnung (18) des Plastifizierextruders (1) mit dem flüssigen Kunststoff (11) zugeführt werden und daß die Faservliese oder Fasermatten (14) nach Umschlingungen im vergrößerten Bereich des Schneckenzylinders in die Nuten und auf die Stege der Einzugswelle (5) eingeführt werden.

2. Verfahren nach Anspruch 1, **dadurch gekennzeichnet, daß** die Faservliese oder Fasermatten (14) nach Umschlingungen im vergrößerten Bereich des Schneckenzylinders durch Abstreifer (10, 15, 21) in die Nuten und auf die Stege der Einzugswelle (5) gedrückt werden.

3. Verfahren nach Anspruch 1, **dadurch gekennzeichnet, daß** die Faservliese oder Fasermatten (14) nach Umschlingungen im vergrößerten Bereich des Schneckenzylinders durch Abstreifer (10, 15, 21) in die Nuten und auf die Stege der Einzugswelle (5) und der Tandemwelle (4) gedrückt werden.

4. Verfahren nach den Ansprüchen 1 bis 3, **dadurch gekennzeichnet, daß** das Flächengewicht bzw. das Metergewicht des Faservlieses oder der Fasermatten (14) und/oder des Geleges vor dem Einlauf in dem Plastifizierextnrder (1) kontinuierlich gewogen und durch eine rückwärts - und/oder vorwärtsgerichtete kaskadische Regelstrategie der prozentuale Fasergewichtsanteil im Plastifikat (24) und das Plastifikatgewicht in engen Toleranzen gehalten wird.

5. Verfahren nach einem oder mehreren der vorhergehenden Ansprüche 1 bis 4, **dadurch gekennzeichnet, daß** die endlosen Faservliese oder Fasermatten (14) von Faserrohballen in einer Vliesherstellungsanlage hergestellt und daraus direkt dem Plastifizierextruder (1) zugeführt werden.

6. Verfahren nach einem oder mehreren der vorhergehenden Ansprüche 1 bis 5, **dadurch gekennzeichnet, daß** durch einen manuellen oder automatischen Bobinen/Rollenwechsel die Faservlies- oder Fasermattenenden zu einem endlosen Faservlies oder Fasermatte (14) für die Zuführung in den Plastifizierextruder (1) verbunden wird.

7. Verfahren nach einem oder mehreren der vorhergehenden Ansprüche 1 bis 6, **dadurch gekennzeichnet, daß** das Faservlies oder die Fasermatte (14) durch Aufstreuen der Faser direkt auf einem Transportband gebildet und dem Plastifizierextruder (1) zugeführt wird.

8. Verfahren nach einem oder mehreren der vorhergehenden Ansprüche 1 bis7, **dadurch gekennzeichnet, daß** das Faservlies und/oder die Fasermatte (14) direkt innerhalb der Fertigungslinie getrocknet wird, bevor diese in den Plastifizierextruder (1) eingezogen wird.

9. Verfahren nach einem oder mehreren der vorhergehenden Ansprüche 1 bis8, **dadurch gekennzeichnet, daß** das Faservlies und/oder Fasermatte (14) innerhalb der Fertigungslinie vorgewärmt wird, bevor diese in den Plastifizierextruder (1) eingezogen wird.

10. Verfahren nach einem oder mehreren der vorhergehenden Ansprüche 1 bis 9, **dadurch gekennzeichnet, daß** die Faservliesbahn oder Fasermattenbahn (14) zusätzlich als Transportbahn für aufgestreute Kurzfasern, Langfasergranulate, Granulat, Rezyklatchips oder Füllstoffe dient.

11. Anlage zur Herstellung von faserverstärkten Kunststoffmassen (14), umfassend einen Kunststoff-Aufschmelzextruder(30) und einen Plastifizierextruder(1) mit einer einen endlosen Faserstrang beheizenden Heizeinrichtung in der Transportlinie zum Piastifizierextruder (1), eine Imprägniervorrichtung im Plastifizierextruder(1) zum Einführen des Faserstranges (14), wobei der Plastifizierextruder(1) aus einem Gehäuse (25) mit zwei Bohrungen (2, 3) und Achsen (6, 7) zweier drehangetriebener Extruderwellen(4, 5) besteht, im Gehäuse (25) eine Zuführöffnung (18) zum Einführen eines Faserstranges (14) in die Schneckenbohrungen (2, 3) vorgesehen ist, die Plastifizierextruderlänge(I) in eine Einzugs- und Imprägnierstrecke(m) und eine Austrag- und Förderstrecke (n) eingeteilt ist, wobei das Gehäuse (25) für die Einzugs- und Imprägnierstrecke (m) mit im Durchmesser vergrößerten Zylinderbohrungen (2, 3) ausgebildet ist, eine Austragsdüse (13) über der Zuführöffnung (18) angebracht ist, die Zuführöffnung (18) in ihrer Längserstreckung vorzugsweise parallel zu den Achsen in etwa tangential über einer Extruderwelle (5) vorgesehen ist und in der Austrag- und Förderstrecke (n) die Zylinderbohrungen mit dem sonst üblichen Durchmesser (d) ausgeführt sind, zur Durchführung des Verfahrens nach den Ansprüchen 1 bis 10, **dadurch gekennzeichnet, daß** zum Einführen von bahnförmigen endlosen Faservliesen oder Fasermatten (14) aus Natur-, Chemie-, Glas-, Mineral-, Kohlenstoff-, Reiß- oder Metallfasern in den Plastifizierextruder (1) die Zuführöffnung (18) parallel zu den Extruderachsen (6, 7) und schlitzförmig über der Einzugswelle (5) angeordnet ist, wobei die Eingangsschlitzlänge mit etwa der Breite (b) des Faservlieses oder den Fasermatten (14) ausgeführt ist, die um 2 bis 20 mm, vorzugsweise exzentrisch angeordneten, vergrößerten Durchmesser (D) der Gehäusebohrungen (2, 3) nach Umschlingungen wieder mit dem sonst üblichen Durchmesser (d) versehen sind oder nach Umschlingungen Abstreifer (10/15) an der Tandem- und/oder an der Einzugswelle (4, 5) angeordnet sind.

12. Anlage nach Anspruch 11, **dadurch gekennzeichnet, daß** das endlose Faservlies oder die endlose Fasermatte (14) in der Zuführöffnung (18) über eine abgerundete Einlaufwand (12) des Eingangsschlitzes geführt ist.

13. Anlage nach den Ansprüchen 11 und 12, **dadurch gekennzeichnet, daß** bei Verwendung von aus Faserstücken bestehendem Faservlies (14) stromabwärts nach der Zuführöffnung (18) die Durchmesserreduzierung (d) spiralförmig in Drehrichtung endend ausgeführt ist.

14. Anlage nach einem oder mehreren der Ansprüche 11 bis 13, **dadurch gekennzeichnet, daß** auf der Einzugsseite der Zuführöffnung (18) eine Einlaufbacke (16) mit einem oszillierendem Antrieb bewegbar angeordnet ist.

15. Anlage nach einem oder mehreren der Ansprüche 11 bis 14, **dadurch gekennzeichnet, daß** die Einlaufbacke (16) thermisch isoliert zum Schneckengehäuse (25) angeordnet ist.

16. Anlage nach einem oder mehreren der Ansprüche 11 bis 15, **dadurch gekennzeichnet, daß** die Temperatur der Einlaufbacke (16) unterhalb der Klebetemperatur des Faservlieses (14) temperierbar ist.

17. Anlage nach einem oder mehreren der Ansprüche 11 bis 16, **dadurch gekennzeichnet, daß** in der Zuführöffnung (18), ggf. austauschbare, Abstreifer (21) vorgesehen sind.

18. Anlage nach einem oder mehreren der Ansprüche 11 bis 17, **dadurch gekennzeichnet, daß** die Abstreifer (10, 15 und 21) zu den Schneckenstegen (23) einen Spalt aufweisen, welcher kleiner ist als der Spalt bei den vergrößerten Gehäusebohrungen (2, 3).

## Claims

1. A method for the manufacture of fiber-reinforced plastic compositions (24), by using a plasticizing extruder (1) in which an endless fiber strand (14) is drawn into the infeed opening (18) of the plasticizing extruder (1) via an infeed device and preheating device with its width (b) parallel to the extruder shafts (6, 7) and approximately tangential to an extruder shaft (5) and wound up about the extruder shafts (4, 5) in a driving manner and into cylinder bores (2, 3) of worm cylinders, wherein the application of a liquid plastic film (11) onto the extruder shaft (5) and the pressing in of the fiber strand (14) into the plastic film (11) occurs in the infeed opening (18), thereafter the fiber strand (14) is wetted or saturated within the feed and impregnating section (m) with the individual fibers on the extruder shaft (4, 5) by rubbing in or through on all sides with the plastic film (11), and the individual fibers or the fiber strand which is thoroughly impregnated or thoroughly saturated with the plastic is guided from the feed and impregnating section (m) with a worm cylinder with reduced diameter to a discharge and conveying section (n) and is discharged as a fiber-reinforced plastic mass (24) which can be further processed, **characterized in that** web-like endless fiber fleeces or fiber mats (14) which are provided with approximately the width (b) of the slot length of the infeed opening (18) and are made of natural, chemical, glass, mineral, carbon, breaker or metal fibers and their possible combinations are supplied to the slot-like infeed opening (19) of the plasticizing extruder (1) with the liquid plastic (11) and that the fiber fleeces or fiber mats (14) are introduced after the wrap-around in the enlarged section of the worm cylinder into the grooves and the ridges of the feed shaft (5).

2. A method according to claim 1, **characterized in that** the fiber fleeces or fiber mats (14) are pressed by strippers (10, 15, 21) into the grooves and onto the ridges of the feed shaft (5) after wrap-around in the enlarged section of the worm cylinder.

3. A method according to claim 1, **characterized in that** the fiber fleeces or fiber mats (14) are pressed by strippers (10, 15, 21) into the grooves and onto the ridges of the feed shaft (5) and the tandem shaft (4) after wrap-around in the enlarged section of the worm cylinder.

4. A method according to claims 1 to 3, **characterized in that** the mass per unit area or meter weight of the fiber fleece or the fiber mats (14) and/or the interlaid scrim is weighed continuously prior to entering the plasticizing extruder (1) and the percentage share of fiber weight in the plasticized material (24) and the weight of the plasticized material is kept within narrow tolerances by a rearward or forward facing cascade control strategy.

5. A method according to one or several of the preceding claims 1 to 4, **characterized in that** the endless fiber fleeces or fiber mats (14) are manufactured from raw bales of fibers in a fleece making unit and are supplied therefrom directly to the plasticizing extruder (1).

6. A method according to one or several of the preceding claims 1 to 5, **characterized in that** the ends of the fiber fleece or fiber mats are joined into an endless fiber fleece or fiber mat (14) for the supply to the plasticizing extruder (1) by means of a manual or automatic change of bobbins/rollers.

7. A method according to one or several of the preceding claims 1 to 6, **characterized in that** the fiber fleece or the fiber mat (14) is formed by sprinkling the fiber directly onto a conveyor belt and is supplied to the plasticizing extruder (1).

8. A method according to one or several of the preceding claims 1 to 7, **characterized in that** the fiber fleece and/or the fiber mat (14) is dried directly within the production line before the same is drawn into the plasticizing extruder (1).

9. A method according to one or several of the preceding claims 1 to 8, **characterized in that** the fiber fleece and/or the fiber mat (14) is preheated within the production line before it is drawn into the plasticizing extruder (1).

10. A method according to one or several of the preceding claims 1 to 9, **characterized in that** the fiber fleece web or fiber mat web (14) is used additionally as a conveying web for sprinkled short fibers, long fiber granulates, granulate, recycled chips or filler materials.

11. An apparatus for the manufacture of fiber-reinforced plastic composites (14), comprising a plastic fusion extruder (30) and a plasticizing extruder (1), including a heating device heating an endless fiber strand in the transport line to the plasticizing extruder (1), an impregnating apparatus in the plasticizing extruder (1) for introducing the fiber strand (14), wherein the plasticizing extruder (1) consists of a housing (25) with two bores (2, 3) and shafts (6, 7) of two rotatably driven extruder shafts (4, 5), an infeed opening (18) for introducing a fiber strand (14) into the worm bores (2, 3) is provided in the housing (25), the plasticizing extruder length (I) is subdivided into a feed and impregnating section (m) and a discharge and transport section (n), wherein the housing (25) for the feed and impregnating section (m) is provided with cylinder bores (2, 3) which are enlarged in their diameter, a discharge nozzle (13) is applied above the infeed opening (18), the infeed opening (18) is provided in its longitudinal extension preferably parallel to the shafts approximately tangential above an extruder shaft (5), the cylinder bores are provided in the discharge and transport section (n) with the otherwise usual diameter (d), for performing the method according to the claims 1 to 10, **characterized in that** for the purpose of feeding web-like endless fiber fleeces or fiber mats (14) made of natural, chemical, glass, mineral, carbon, breaker or metal fibers into the plasticizing extruder (1) the infeed opening (18) is arranged parallel to the extruder shafts (6, 7) or in a slot-like manner above the feed shaft (5), wherein the length of the input slot is provided with approximately the width (b) of the fiber fleece or the fiber mats (14), the diameters (D) of the housing bores (2, 3) which are enlarged by 2 to 20 mm and are preferably arranged in an eccentric way are provided with the usual diameter (d) again after the wrap-around, or strippers (10/15) are arranged on the tandem and/or feed shaft (4, 5) after the wrap-around.

12. An apparatus according to claim 11, **characterized in that** the endless fiber fleece or the endless fiber mat (14) is guided in the infeed opening (18) via a rounded feed wall (12) of the input slot.

13. An apparatus according to claims 11 and 12, **characterized in that** when using fiber fleece (14) consisting of fiber pieces the reduction in diameter (d) is provided downstream after the infeed opening (18) in a spiral manner ending in the direction of rotation.

14. An apparatus according to one or several of the claims 11 to 13, **characterized in that** a feed-slot jaw (16) is driveably arranged with an oscillating drive on the feed side of the infeed opening (18).

15. An apparatus according to one or several of the claims 11 to 14, **characterized in that** the feed-slot jaw (16) is arranged in a thermally insulated manner relative to the worm housing (25).

16. An apparatus according to one or several of the claims 11 to 15, **characterized in that** the temperature of the feed-slot jaw (16) can be temperature-adjusted beneath the tackiness temperature of the fiber fleece (14).

17. An apparatus according to one or several of the claims 11 to 16, **characterized in that** strippers (21), which are optionally exchangeable, are provided in the infeed opening (18).

18. An apparatus according to one or several of the claims 11 to 17, **characterized in that** the strippers (10, 15 and 21) have a gap towards the worm ridges (23) which is smaller than the gap in the enlarged housing bores (2, 3).

## Revendications

1. Procédé de réalisation de matières plastiques (24) renforcées par des fibres moyennant une extrudeuse de plastification (1) dans laquelle, par l'intermédiaire d'un système d'alimentation et d'un système de préchauffage, un boudin de fibres (14) sans fin est enroulé et avancé dans l'orifice d'alimentation (18) de l'extrudeuse de plastification (1), à peu près tangentiellement sur un arbre (5) de l'extrudeuse et autour des arbres (4, 5) de l'extrudeuse, sa largeur (b) étant parallèle aux axes (6, 7) de l'extrudeuse, et est introduit dans des trous (2, 3) de cylindres à vis sans fin de diamètre augmenté, ce faisant un film plastique (11) liquide étant appliqué sur l'arbre (5) de l'extrudeuse et le boudin de fibres (14) étant enfoncé dans le film plastique (11) dans l'ouverture d'alimentation (18), ensuite, sur un chemin d'alimentation et d'imprégnation (m), le boudin de fibres (14), avec les différentes fibres contre les arbres (4, 5) de l'extrudeuse, est mouillé ou imbibé sur tous ses côtés du film plastique (11) liquide que l'on fait pénétrer ou pénétrer de part en part par frottement et les fibres individuelles ou le boudin de fibres, imprégnés ou imbibés de part en part de plastique, sont évacués du chemin d'alimentation et d'imprégnation (m) par l'intermédiaire d'un cylindre à vis de diamètre diminué et amenés dans un chemin de sortie et d'extraction (n) et sont évacués sous forme de matière plastique renforcée par des fibres (24) apte à être façonnée, **caractérisé en ce**
**que** des voiles ou des nappes de fibres (14) réalisés en fibres naturelles, chimiques, de verre, minérales, carbone, de textiles recyclés ou de métal et de toutes les combinaisons possibles, et réalisés en bandes continues d'une largeur (b) correspondant environ à la longueur de la fente de l'ouverture d'alimentation (18), sont acheminés vers l'ouverture d'alimentation (18) en fente de l'extrudeuse de plastification (1) avec le plastique liquide (11) et que, après enroulement dans la partie agrandie du cylindre à vis sans fin, les voiles ou les nappes de fibres (14) sont introduits dans les rainures et sur les filets de l'arbre d'alimentation (5).

2. Procédé selon la revendication 1,
**caractérisé en ce qu'**après enroulement dans la partie agrandie du cylindre à vis sans fin, les voiles ou les nappes de fibres (14) sont enfoncés dans les rainures et sur les filets de l'arbre d'alimentation (5), moyennant des racleurs (10, 15, 21).

3. Procédé selon la revendication 1,
**caractérisé en ce qu**'après enroulement dans la partie agrandie du cylindre à vis sans fin, les voiles ou les nappes de fibres (14) sont enfoncés dans les rainures et sur les filets de l'arbre d'alimentation (5) et de l'arbre en tandem (4), moyennant des racleurs (10, 15, 21).

4. Procédé selon les revendications 1 à 3,
**caractérisé en ce que** le poids surfacique ou par mètre courant du voile ou des nappes de fibres (14) et/ou de la grille est pesé en continu avant leur entrée dans l'extrudeuse de plastification (1) et que la fraction pondérale en pourcent des fibres dans la matière plastifiée (24) et le poids de la matière plastifiée sont maintenus dans des tolérances étroites par une stratégie de régulation en cascade dirigée vers l'arrière et/ou vers l'avant.

5. Procédé selon une ou plusieurs des revendications précédentes 1 à 4,
**caractérisé en ce que** les voiles ou nappes de fibres (14) sans fin sont réalisés à partir de balles brutes de fibres dans une installation de fabrication de voiles et sont acheminés directement depuis celle-ci vers l'extrudeuse de plastification (1).

6. Procédé selon une ou plusieurs des revendications précédentes 1 à 5,
**caractérisé en ce que**, par changement manuel ou automatique des bobines/rouleaux, les extrémités des voiles ou nappes de fibres sont reliées de manière à former un voile ou une nappe de fibres (14) continus destinés à être acheminés vers l'extrudeuse de plastification (1).

7. Procédé selon une ou plusieurs des revendications précédentes 1 à 6,
**caractérisé en ce que** le voile ou la nappe de fibres (14) sont réalisés en répartissant directement les fibres sur une bande convoyeuse et sont acheminés vers l'extrudeuse de plastification (1).

8. Procédé selon une ou plusieurs des revendications précédentes 1 à 7,
**caractérisé en ce que** le voile et/ou la nappe de fibres (14) sont séchés directement dans la ligne de production avant d'être introduits dans l'extrudeuse de plastification (1).

9. Procédé selon une ou plusieurs des revendications précédentes 1 à 8,
**caractérisé en ce que** le voile et/ou la nappe de fibres (14) sont préchauffés dans la ligne de production avant d'être introduits dans l'extrudeuse de plastification (1).

10. Procédé selon une ou plusieurs des revendications précédentes 1 à 9,
**caractérisé en ce que** la bande de voile de fibres ou de nappe de fibres (14) sert en outre de bande transporteuse pour des fibres courtes, des granulés fibres longues, des granulés, des copeaux recyclés ou des matières de remplissage répandus sur celle-ci.

11. Installation destinée à la réalisation de matières plastiques (14) renforcées par des fibres, du type comprenant une extrudeuse de surfusion (30) de matière plastique et une extrudeuse de plastification (1) avec, dans la ligne de transport vers l'extrudeuse de plastification (1), un système de chauffage chauffant un boudin de fibres continu, un dispositif d'imprégnation dans l'extrudeuse de plastification (1) pour introduire le boudin de fibres (14), l'extrudeuse de plastification (1) étant constituée d'un boîtier (25) avec deux trous (2, 3) et des axes (6, 7) de deux arbres d'extrudeuse (4, 5) entraînés en rotation, une ouverture d'alimentation (18) étant prévue dans le boîtier (25) pour introduire un boudin de fibres (14) dans les trous (2, 3) de la vis sans fin, la longueur (1) de l'extrudeuse de plastification étant divisée en un chemin d'alimentation et d'imprégnation (m) et en un chemin de sortie et d'extraction (n), le boîtier (25) pour le chemin d'alimentation et d'imprégnation (m) étant réalisé avec des trous (2, 3) de cylindre de diamètre augmenté, une filière (13) étant montée au-dessus de l'ouverture d'alimentation (18), l'ouverture d'alimentation (18) étant prévue environ tangentielle au-dessus d'un arbre d'extrudeuse (5), de préférence parallèle aux axes dans le sens de sa longueur, les trous de cylindre dans le chemin de sortie et d'extraction (n) ayant le diamètre (d) habituel, destinée à mettre en oeuvre le procédé selon les revendications 1 à 10,
**caractérisée en ce**
**que,** pour introduire des voiles ou des nappes de fibres (14) en forme de bande sans fin et réalisés en fibres naturelles, chimiques, de verre, minérales, carbone, de textiles recyclés ou de métal dans l'extrudeuse de plastification (1), l'ouverture d'alimentation (18) est disposée parallèle aux axes (6, 7) de l'extrudeuse et en forme de fente par-dessus l'arbre d'alimentation (5), la longueur de la fente d'entrée correspondant environ à la largeur (b) du voile ou des nappes de fibres (14), les diamètres (D), augmentés de 2 à 20 mm et de préférence excentriques, des trous (2, 3) ménagés dans le boîtier ont, après les enroulements, de nouveau le diamètre (d) habituel ou des racleurs (10/15) sont disposés après les enroulements sur l'arbre en tandem et/ou sur l'arbre d'alimentation (4, 5).

12. Installation selon la revendication 11,
**caractérisée en ce**
**que** le voile de fibres sans fin ou la nappe de fibres sans fin (14) sont introduits dans l'ouverture d'alimentation (18) par une paroi d'entrée (12) arrondie de la fente d'entrée.

13. Installation selon la revendication 11 et 12,
**caractérisée en ce**
**que**, si l'on utilise un voile de fibres (14) constitué de morceaux de fibres, la réduction du diamètre (d) est conformée pour se terminer en spirale suivant la direction de rotation en aval de l'ouverture d'alimentation (18).

14. Installation selon une ou plusieurs des revendications 11 à 13,
**caractérisée en ce**
**que**, du côté admission de l'ouverture d'alimentation (18), est monté mobile un flasque d'entrée (16) avec un entraînement oscillant.

15. Installation selon une ou plusieurs des revendications 11 à 14,
**caractérisée en ce**
**que** le flasque d'entrée (16) est disposé de manière à être thermiquement isolé par rapport au boîtier (25) de la vis sans fin.

16. Installation selon une ou plusieurs des revendications 11 à 15,
**caractérisée en ce**
**que** la température du flasque d'entrée (16) est apte à être tempérée en dessous de la température de collage du voile de fibres (14).

17. Installation selon une ou plusieurs des revendications 11 à 16,
**caractérisée en ce**
**que** des racleurs (21), le cas échéant échangeables, sont prévus dans l'ouverture d'alimentation (18).

18. Installation selon une ou plusieurs des revendications 11 à 17,
**caractérisée en ce**
**que** les racleurs (10, 15 et 21) comportent une fente vers les sommets des filets de la vis sans fin (23), laquelle fente est plus petite que la fente près des trous (2, 3) agrandis du boîtier.
